# EUROPEAN PATENT APPLICATION

(11) **EP 1 526 601 A1**
(43) Date of publication of application: **27.04.2005**
(21) Application number: 04025043.3
(22) Date of filing: 21.10.2004
(51) Int. Cl.: H01M 10/50, H01M 2/22, H01M 10/42

(54) **Battery module having lithium battery, and vehicle control system employing battery module having lithium battery**

(30) Priority: 21.10.2003 JP 2003361175
(71) Applicant: Shin-Kobe Electric Machinery Co., Ltd., 103-0023 Tokyo (JP)
(72) Inventor: Arai, Juichi, Chiyoda-ku, Tokyo 100-8220 (JP); Emori, Akihiko, Chiyoda-ku, Tokyo 100-8220 (JP); Koseki, Mitsuru, c/o Shin-Kobe, 2-chome Chuo-ku Tokyo 103-0023 (JP); Aiba, Tsunemi, c/o Shin-Kobe, 2-chome Chuo-ku Tokyo 103-0023 (JP); Gotou, Takeyuki, c/o Shin-Kobe, 2-chome Chuo-ku Tokyo 103-0023 (JP)
(74) Representative: Beetz & Partner Patentanwälte

(57) **Abstract**

The present invention relates to a battery module having a lithium battery. A battery module (32) with an excellent cooling effect includes a battery unit (194) and a circuit unit (192). The battery unit (194) includes a casing main body (195) having an external frame (195a) formed of a plate-like member in a rectangular shape and an internal member (197) supported inside the external frame (195a). A plurality of lithium single cells (202) are connected in series to form a longitudinal tandem cell (200). A plurality of the tandem cells (200) are disposed on either side of the internal member (197) in parallel, and the entire tandem cells (200) are connected in series by connecting metal fittings that are disposed on either side of the tandem cells (200). A cover (198) with ventilation opening (198a) is mounted on the casing main body (195). The circuit unit (192) is disposed on one end of the battery unit (194) and includes a control circuit that detects the voltage of each of the lithium single cells (202) and transmits the result of detection using a control means.

## Description

### BACKGROUND OF THE INVENTION

### Field of the Invention

The present invention relates to a hybrid car in which a secondary battery (lithium battery) is employed in the engine in an auxiliary manner. In particular, the invention relates to a battery module employing a lithium battery as a vehicle's secondary battery, and a vehicle control system employing a battery module having a lithium battery.

### Background Art

There has been much activity relating to the development of hybrid cars in which a secondary battery is used as an auxiliary source of power for assisting the engine. This is carried out with a view to meeting tighter controls on exhaust emissions and improving fuel efficiency. As secondary batteries for automobiles, a plurality of high-performance, high-capacity lithium batteries, which are made from materials including lithium oxides as a principal component, are often combined and used. Such lithium batteries normally have a wound (cylindrical) structure in which electrodes, both positive and negative, are provided by coating a metal film with an active substance, where such film is wound with a separator placed between the electrodes so as to prevent a direct contact therebetween, such that the battery has a spiral cross section. The secondary batteries of this type that are used as batteries for electric vehicles are used for assisting the engine (during acceleration), or for supplying electric power to an electric motor while the vehicle is running solely on the electric motor while terminating the operation of the engine on a flat road, for example. The secondary batteries thus supply a large current to the motor, and their electric power decreases as they supply electric power to the motor. Therefore, the secondary batteries are charged with electric power generated by the drive motor as needed.

Thus, the secondary batteries that are used in electric vehicles are charged and discharged repeatedly and frequently, generating a large amount of heat. Another factor is the temperature dependency of battery performance, so that the battery cooling capacity must be enhanced if battery life is to be extended. For enhancement of the battery cooling capacity, many methods have thus far been proposed.

For example, a system has been proposed (see Patent Document 1) in which the shape of each of the auxiliary ribs that form 1^{st} to 7^{th} louvers 28a to 28g is made different so as to restrict the passageway of cooling air and thereby increase the rate of the cooling air as it nears the cooling-air outlet 27. The temperature variations between the individual tandem cells are eliminated, and the cooling air from a by-pass path is directly combined with the air the temperature of which has increased as it passed through the tandem cells so that the temperature increases in the tandem cells near the cooling air outlet 27, thereby cooling the entire tandem cells in a uniform manner.

(Patent Document 1: JP Patent Publication (Kokai) No. 2001-155789 A (page 6 and Fig. 10).

### SUMMARY OF THE INVENTION

The above-mentioned conventional battery for electric vehicles is capable of sufficiently cooling the tandem cells. However, there is a need to further improve the cooling efficiency so as to reduce the mounting space for batteries in automobiles.

It is therefore an object of the invention to provide a battery module having an excellent cooling effect.

It is another object of the invention to provide a vehicle control system with an excellent cooling effect that employs a battery module having lithium batteries.

In one aspect, the invention comprises a battery unit and/or a circuit unit.

The battery unit may include a casing main body having an external frame formed of a plate-like member in a rectangular shape and/or an internal member supported inside the external frame. A plurality of lithium single cells may be connected in series to form a longitudinal tandem cell. A plurality of the tandem cells may be disposed on either side of the internal member in parallel. The entire tandem cells may be connected in series by connecting metal fittings that are disposed on either side of the tandem cells. A cover with ventilation opening may be mounted on the casing main body.

The circuit unit may be disposed on one end of the battery unit and may include a control circuit that detects the voltage of each of the lithium single cells. The circuit unit may transmit the result of detection using a control means.

In a second aspect, the invention relates to a vehicle control system that comprises a battery unit and/or a circuit unit.

The battery unit may include a casing main body having an external frame formed of a plate-like member in a rectangular shape and/or an internal member supported inside the external frame. A plurality of lithium single cells may be connected in series to form a longitudinal tandem cell. A plurality of the tandem cells may be disposed on either side of the internal member in parallel. The entire tandem cells may be connected in series by connecting metal fittings that are disposed on either side of the tandem cells. A cover with ventilation opening may be mounted on the casing main body.

The circuit unit may be disposed on one end of the battery unit and may include a control circuit that detects the voltage of each of the lithium single cells. The circuit unit may transmit the result of detection using a control means.

The system may further comprise one or more of the following:
a function for performing a voltage adjustment by an on/off control of a bypass discharge circuit disposed on a heat-dissipating plate and connected to each lithium single battery (cell);
a function for controlling a switch for the charging/ discharging of the tandem cells based on a series voltage value of the plurality of tandem cells;
a self-diagnosing function of diagnosing each lithium single battery (cell) for any abnormality based on an internal resistance value computed from a detected voltage value of each lithium single battery (cell);
a cooling function of detecting the temperature of each of the lithium single batteries (cells) of which said tandem cells are made, and turning on or off a switch of a tandem cell cooling fan; and
an function of assisting the engine by supplying an electric current to the drive motor in accordance with torque allocation versus charge ratio characteristics depending on an accelerator depression amount while the vehicle is running.

In accordance with the invention, better handleability can be obtained.

In accordance with a preferred embodiment of the invention, less mounting space on an automobile is required.

In accordance with a preferred embodiment of the invention, a better heat-dissipating property can be obtained.

Moreover, in accordance with a preferred embodiment of the invention, a better cooling effect can be obtained efficiently.

### BRIEF DESCRIPTION OF THE DRAWINGS

Fig. 1 schematically shows an automobile equipped with a battery module having a lithium battery of the invention, and an embodiment of a vehicle control system employing the battery module having the lithium battery.
Fig. 2 shows a block diagram of a control system for the transmission of power to a power transmission mechanism 20 shown in Fig. 1, and of a drive system.
Fig. 3 shows an external perspective view of a lithium battery module.
Fig. 4 shows a front view of the lithium battery module of Fig. 3.
Fig. 5 shows a plan view of the lithium battery module of Fig. 3.
Fig. 6 shows a left-side view of the lithium battery module of Fig. 3.
Fig. 7 shows a perspective view of the assembly of the lithium battery module of Fig. 3.
Fig. 8 shows a heat-dissipating plate on which balancing circuits for adjusting the charge/discharge condition of single batteries (cells) provided in a circuit unit are mounted, and a battery control unit 250.
Fig. 9 shows a database for the battery control unit shown in Fig. 2.
Fig. 10 shows a database for a motor-system control unit for the control of the drive torque of the motor shown in Fig. 2.
Fig. 11 shows a torque allocation characteristics chart based on the terminal voltage of a lithium battery against a required torque.
Fig. 12 shows program processing levels (interrupt processing levels) in the battery control unit.
Fig. 13 shows an information transmission flow in the battery control unit shown in Fig. 12.
Fig. 14 shows the flow of information request from the battery control unit of Fig. 12 to an upper-level control unit.
Fig. 15 shows the flow of a process of measuring the terminal voltage and temperature distribution of the single batteries (lithium single cells) shown in Fig. 12.
Fig. 16 shows the flow of abnormality diagnosis of each lithium single cell shown in Fig. 12 and a process of handling an abnormality.
Fig. 17 shows the flow of a process of adjusting the discharge condition of the single battery (lithium single cell) shown in Fig. 12.
Fig. 18 shows the program processing levels (interrupt processing levels) in the motor-system control unit for controlling the drive torque of the motor shown in Fig. 2.
Fig. 19 shows the flow of a process of outputting control data to a motor drive circuit shown in Fig. 18.
Fig. 20 shows the flow of a process of requesting data transmission request to the battery control unit shown in Fig. 18.
Fig. 21 shows the flow of a process of taking in information from the upper-level control unit shown in Fig. 18.
Fig. 22 shows an engine control flow.
Fig. 23 shows the structure of a lithium single cell according to the invention.

### DESCRIPTION OF THE PREFERRED EMBODIMENTS

In accordance with the invention, a plurality of lithium single cells are connected in series to form a single longitudinal tandem cell. A plurality of such tandem cells are retained on either side of an internal member such that necessary space can be reduced. A cover with ventilation openings is mounted on a casing main body such that it covers the tandem cells in the battery unit, thereby ensuring efficient thermal dissipation. On one end of the battery unit, there is provided a circuit unit that detects the voltage of each lithium single cell. The battery unit also includes a control circuit for causing the detected result to be transmitted by a control means.

### Embodiment 1

Embodiments of the invention will be described in detail in the following.

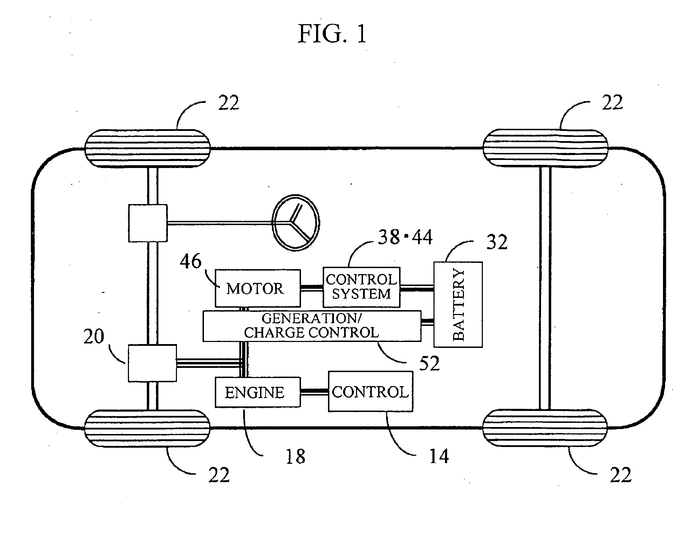

Fig. 1 schematically shows an embodiment of the invention in which an automobile is equipped with a battery module having a battery and a vehicle control system employing the battery module having the lithium battery.

In Fig. 1, the vehicle has four wheels 22, two in front and two in the rear. The front two wheels 22 are driven via a power transmission mechanism 20 by the torque generated by an engine 18 and a motor 46. The engine 18 is controlled by a control device 14. The motor 46 is driven by electric power supplied by a lithium battery module 32 via a control system (including a motor-system controller 38 and a motor drive circuit 44). The lithium battery module 32 is adapted to be charged by the motor 46 via a generation/charge control mechanism 52.

During operation, an instruction from the driver is detected by an accelerator sensor (which detects the degree of depression of the gas pedal), and then the allocation of torque generated by the engine 18 and the motor 46 is determined. Specifically, how the required torque of the vehicle should be shared between the engine 18 and the motor 46 is determined in accordance with the degree of gas pedal depression (accelerator-instructed value) and the charge ratio of the lithium battery module for the driving of the motor 46. Based on the thus determined torque allocations, the engine 18 is controlled by the control device 14.

The torque to be provided by the motor 46 is similarly determined on the basis of the torque allocations determined by the accelerator depression amount (accelerator-instructed value) and the charge ratio of the lithium battery module 32 that drives the motor 46. Then, the electric power supply to the motor 46 from the lithium battery module 32 is controlled by the control system (the motor controller 38 and the motor drive circuit 44), thereby controlling the torque generated by the motor 46.

The kinetic energy generated by the vehicle is transducted into electric energy during deceleration by regenerative control, for example, and is then supplied to the batteries that are then charged.

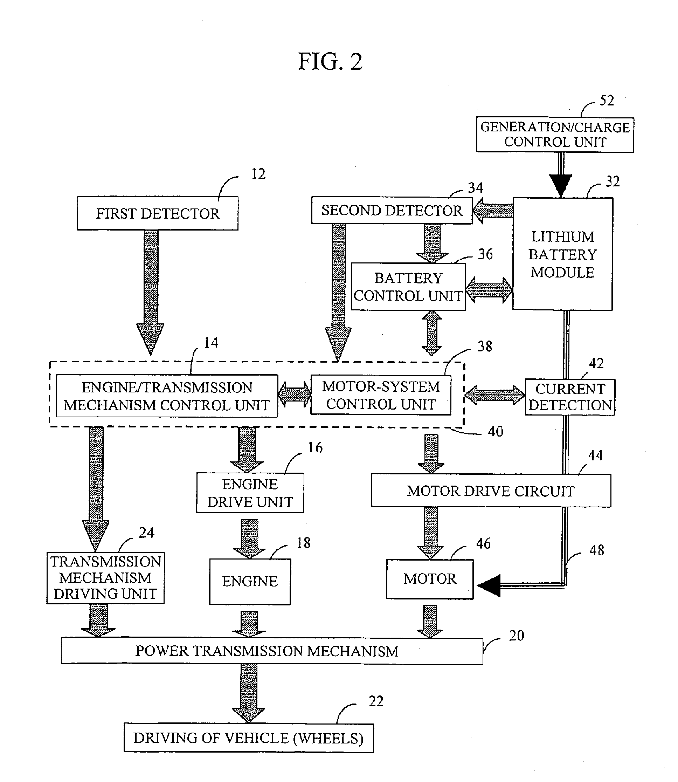

Fig. 2 shows a block diagram of a power transmission control system and a drive system, the power transmission control system controlling the power that is transmitted to the power transmission mechanism 20.

In Fig. 2, an engine drive shaft for transmitting the driving force (torque) from the engine 18 and a motor drive shaft for transmitting the driving force (torque) from the motor 46 are connected to the power transmission mechanism 20 for driving the wheels 22 on which the vehicle runs. In the power transmission mechanism 20, the driving force (torque) transmitted from the engine 18 via the engine drive shaft is added to the driving force (torque) transmitted from the motor 46 via the motor driving shaft, and the resultant total driving force (torque) is transmitted to the wheel shafts, by which the wheels 22 are rotated and the vehicle is run.

To the engine 18, an engine/transmission mechanism controller 14 in the controller 40 is connected via an engine drive unit 16. To the motor 46 is further connected a motor-system controller 38 in the controller 40 via a motor drive circuit 44. The controller 40 is responsible for torque allocation control whereby the torque to be handled by the engine/transmission mechanism controller 14 for controlling the drive torque from the engine 18 and the torque to be handled by the motor-system controller 38 for controlling the drive torque from the motor 46 are determined.

To the controller 40, a first detector 12, a second detector 34, and a battery controller 36 are connected. To the controller 40 is further connected a current detector 42 that detects the value of the current that is supplied from the lithium battery module 32 to the motor 46. To the lithium battery module 32, the second detector 34, the battery controller 36, and the generation/charge control mechanism 52 are connected.

The first detector 12 performs necessary detections for the control of the engine 18 and the power transmission mechanism 20. Major types of information detected by the first detector 12 includes an accelerator operation amount Pa, an intake air amount Qa that is supplied to the engine, engine rotation speed Ne, engine cooling water temperature Tw, air-fuel ratio detected from the exhaust condition, vehicle speed Vs, and other types of information used for diagnostic purposes.

The engine/transmission mechanism controller 14 also determines the torque TD required by the vehicle from the vehicle speed Vs and the engine rotation speed Ne, based on the accelerator operation amount Pa. The controller 40 then allocates the required torque TD to torque TE to be provided by the engine 18 and torque TM to be provided by the motor 46, based on the instantaneous vehicle speed and the charge state (charge ratio) of the lithium battery module 32. Information about the torque TM provided by the motor 46 is then transmitted from the controller 40 to the motor-system controller 38.

As the allocation of the torque TE to the engine 18 is determined in the controller 40, the engine/transmission mechanism controller 14 controls the opening of the throttle valve in order to control the air amount Qa supplied to the engine based on the required torque TD.

Specifically, the throttle valve opening is controlled by the engine drive unit 16 in accordance with the required torque TD. The engine drive unit is a mechanism adapted for controlling the opening timing and degree of the intake valve, the ignition timing, the timing and degree of opening of the exhaust valve, and the amount of reflux of exhaust gas, as well as the throttle valve opening. As a result, the amount Qa of air supplied to the engine 18 is changed. The air amount Qa supplied to the engine 18 is detected by the first detector 12, and the amount of fuel supply is then determined with respect to the air amount Qa.

The ignition timing is determined on the basis of the engine rotation speed Ne and the basic fuel amount (Qa/Ne). The calculations of these control amounts are performed by the engine/transmission mechanism control unit 14 in the control unit 40. The thus determined control amounts are used in controlling the engine drive unit 16 such that the engine 18 generates the allocated torque.

The control unit 40 includes the engine/transmission mechanism control unit 14 that controls a transmission mechanism drive unit 24, i.e., transmission control, and the motor-system control unit 38 that controls the transmission and disengagement of generated torque with respect to the motor 46.

The torque generated by the motor 46 is controlled by the current value and frequency of the alternating current supplied from the lithium battery module 32. Specifically, the frequency of the alternating current from the lithium battery module 32 is determined based on the current rotation speed of the motor 46, and the current supply is determined.

The value of the current supplied to the motor 46 from the lithium battery module 32 via a power line 48 is detected by a current detector 42 and is then fed to the control unit 40.

The second detector 34 performs necessary detections for the control of the motor 46. Specifically, the information detected by the second detector 34 includes the voltage value of each of the lithium cells making up the lithium battery module 32, the charge state (i.e., a voltage value) of the lithium battery module 32, the presence of any abnormal state of the lithium cells in the lithium battery module 32, and the temperature of each lithium battery (cell), for example.

A battery control unit 36 determines whether or not engine assist by the motor 46 is required, depending on whether the charge voltage of the lithium battery module 32 is higher or lower than the reference voltage.

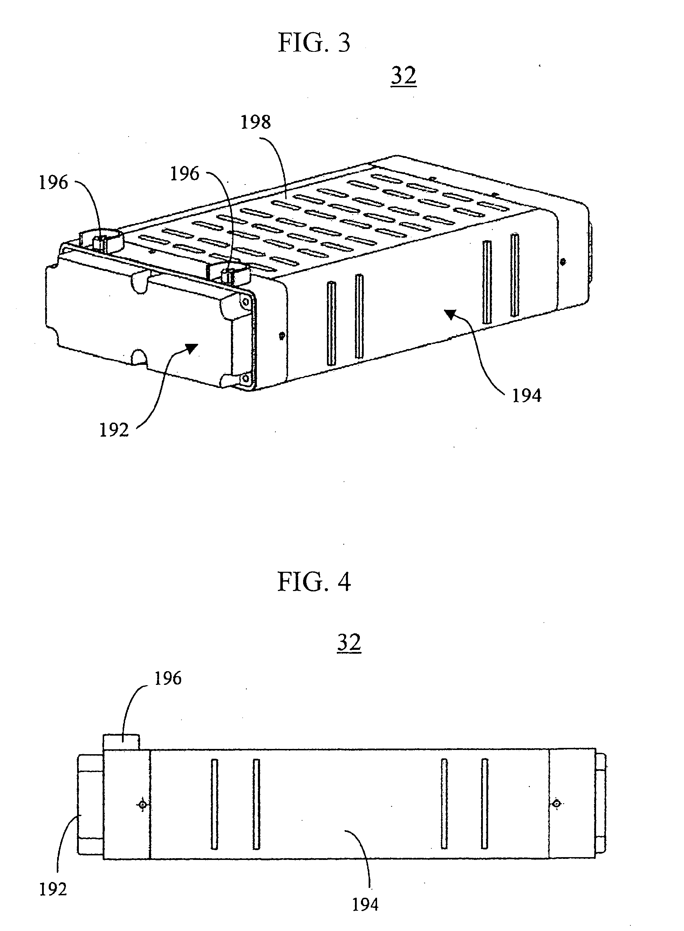

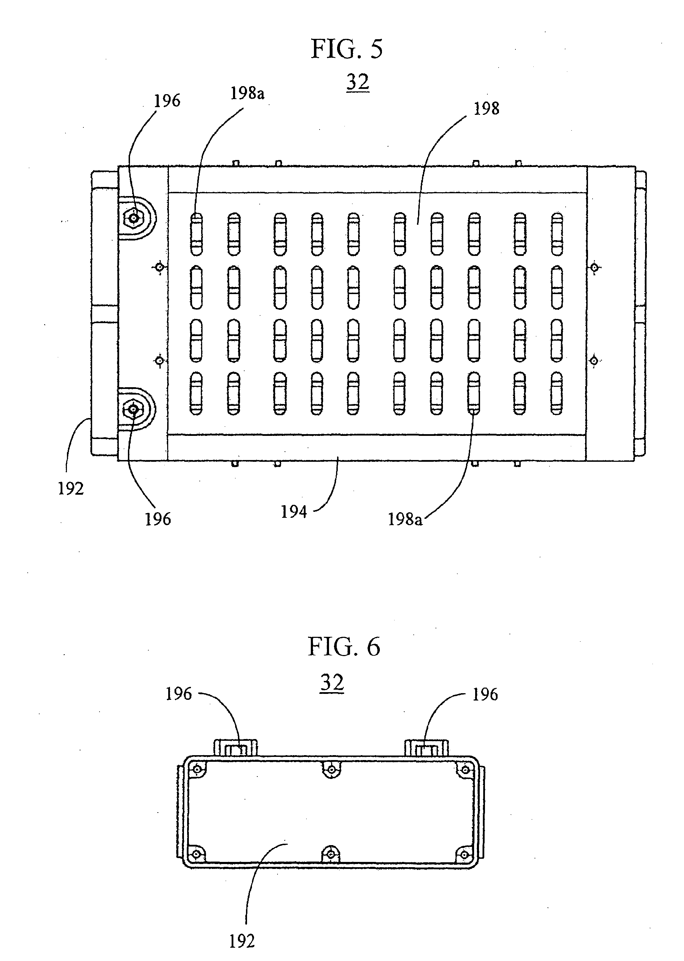

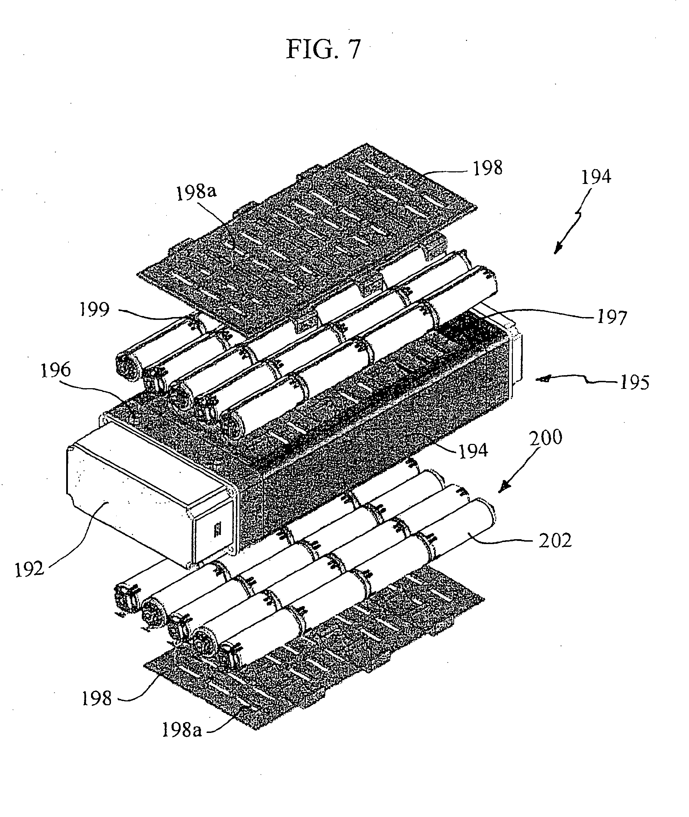

Fig. 3 shows an exterior perspective view of the lithium battery module 32. Fig. 4 shows a front view of the lithium battery module 32. Fig. 5 shows a plan view of the lithium battery module 32. Fig. 6 shows a left-side view of the lithium battery module 32. Fig. 7 shows a perspective view of the assembly of the lithium battery module 32.

In Figs. 3 to 6, the lithium battery module 32 is made up of a circuit unit 192 and a battery unit 194. The circuit unit 192 is disposed at the end of the battery unit 194. In the battery unit 194, a plurality of tandem cells (set batteries), each consisting of a plurality of lithium single cells, are accommodated. The battery unit 194 is provided with an upper and a lower cover 198. Near or within the circuit unit 192, there are disposed upwardly protruding charge/discharge terminals 196 for the charging and discharging of the tandem cells (set batteries) accommodated within the battery unit 194, each cell consisting of a plurality of lithium single cells.

The structure of the lithium battery module 32 is described in more detail with reference to Fig. 7.

In Fig. 7, the battery unit 194 includes a case main body 195, which further includes an external frame 195a made of a board-like member with rectangular edges, and an internal member 197 supported within the external frame 195a at about the middle of the height thereof. In the internal member 197, there are disposed a plurality (five) of longitudinal tandem cells (set batteries) arranged in parallel, each longitudinal tandem cell consisting of a series connection of a plurality (four or five, for example) of lithium single cells 202 to 20x. Connecting metal fittings (not shown) are disposed at the ends of the tandem cells (set batteries) by which the multiple tandem cells are connected in series.

Thus, the lithium battery module 32 consists of five or six tandem cells (set batteries) 200 each consisting of four single batteries (single cells) 202 connected in series. When there are five tandem cells (set batteries), 20 single batteries (single cells) will be connected in series. When there are six tandem cells (set batteries) 200, 24 single batteries (single cells) 202 will be connected in series. As the tandem cells (set batteries) 200 are arranged on both sides of the internal member 197, which is the central support member, in the battery unit 194, the battery unit 194 accommodates 40 or 48 single batteries (single cells) 202 connected in series. Thus, if two lithium battery modules 32 connected in series were to be mounted on an automobile, 80 or 96 single batteries (single cells) 202 would be connected in series as the power supply for the control circuit (including the motor-system control unit 38 and the motor drive circuit 44) for the motor 46. In the figure, numeral 199 designates joint members for ensuring the physical arrangement of the single batteries (single cells) 202 as well as for providing electrical connection therebetween.

The internal member 197, which is supported at roughly the intermediate height within the external frame 195a of the case main body 195, is further provided with a plurality of supporters for supporting the tandem cells (set batteries) 200 fitted in the internal member such that they do not vibrate as the vehicle is driven. The covers 198 mounted on the external frame 195a of the case main body 195 of the battery unit 194 are provided with a number of ventilation openings 198a for allowing air to flow from top to bottom.

The circuit unit 192 includes transmission and reception connectors, not shown, via which control signals are transmitted and received, or low-voltage power supply is carried.

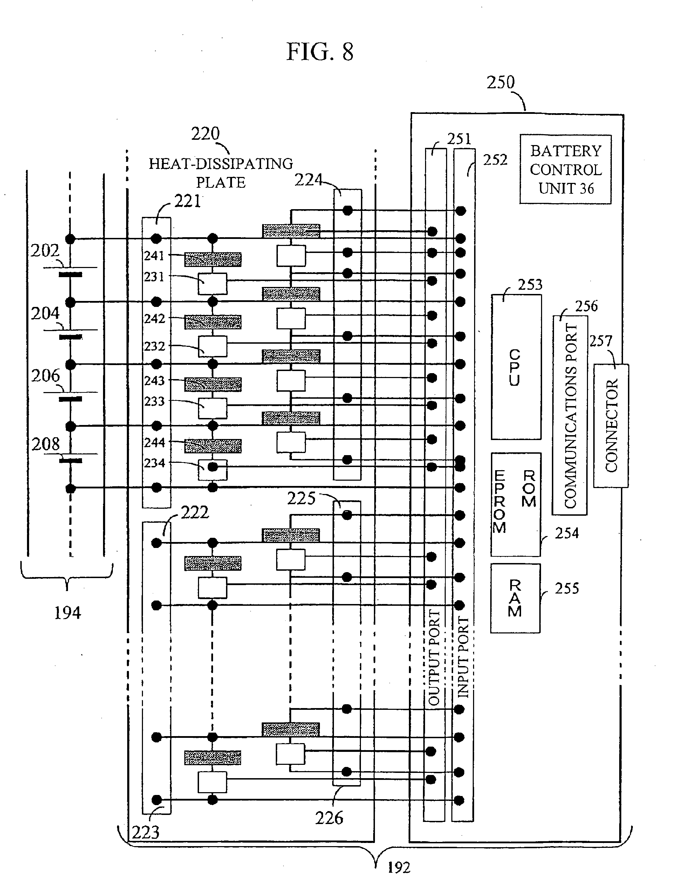

Fig. 8 shows a heat-dissipating plate 220 on which balancing circuits for adjusting the charge/discharge state of the single batteries (single cells) disposed on the circuit unit 192 are mounted, and a battery control unit 250. The battery control unit 250 of Fig. 8 corresponds to the battery control unit 36 of Fig. 2.

In Fig. 8, four or five single batteries (single cells), such as 202, 204, 206, and 208, are connected in series to form the tandem cell (set battery) 200. The heat-dissipating plate 220 includes bypass discharge circuits provided for each of the single batteries (single cells) 202 to 208. The bypass discharge circuits are adapted to cause any of the single batteries (single cells) 202 to 208 to discharge if the voltage of that battery increases beyond a reference value so that the voltages of the single batteries can be substantially equalized.

The heat-dissipating plate 220 is further provided with terminal bases 221, 222, 223, 224, 225, and 226 for connection within each tandem cell (set battery). As many terminal bases as there are the tandem cells (set batteries) are provided (for example, six terminal bases are provided when there are six tandem cells). Between any two adjacent terminals of connection terminals that are provided on the terminal base 221, a series circuit of a resistor 241 and a switching circuit 231 is connected. One pole (positive, for example) of each single battery (single cell) 202 is connected to one of any particular pair of connection terminals on the terminal base 221, and the other pole (negative, for example) of the single battery (single cell) is connected to the other of the pair of connection terminals. By turning on and off the switching circuit 231, the bypass discharge circuit is turned and off, thereby discharging the single battery (single cell) 202.

Similarly, one pole (negative, for example) of the single battery (single cell) 204 is connected to one connection terminal of another pair of connection terminals on the terminal base 221, and the other pole (positive, for example) of the single battery (single cell) 204 is connected to the other connection terminal. By turning on and off the switching circuit 232, the bypass discharge circuit is turned on and off, thereby discharging the single battery (single cell) 204. The other single batteries (single cells) 206 to 208 are similarly connected, and by similarly turning on and off the switching circuits 233 and 234, the bypass discharge circuits are turned on and off, thereby discharging the single batteries (single cells) 206 to 208. The bypass discharge circuits include a series connection of the resistor 241 (242 to 244) and the switching circuit 231 (232 to 234) across any particular pair of connection terminals. By turning on and off the switching circuit 231 (232 to 234), the bypass discharge circuit is turned on and off.

On the heat-dissipating plate 220, there is disposed the battery control unit 250 at a predetermined distance. Specifically, the circuit unit 192 is formed in two layers. The heat-dissipating plate 220 is disposed on either the upper or lower stage, and the battery control unit 250 is disposed on either the lower or upper stage, so that the circuit unit 192 can be reduced in size. The heat-dissipating plate 220 and the battery control unit 250 may be disposed in a front and a subsequent stage, respectively.

The battery control unit 250 performs the on/off control of the power output of the lithium battery consisting of a parallel arrangement of five or six tandem cells connected in series, each tandem cell consisting of four lithium single cells (i.e., the lithium battery consists of a series connection of a total of 40 or 48 lithium single cells). The battery control unit 250 also performs the on/off control of the charging of the lithium battery, the voltage detection of the lithium single cells, and the discharge control of the lithium single cells. Numeral 251 designates an output port for the output of power from the lithium battery, and numeral 252 designates an input port for the input of charging power for the charging of the lithium battery (individual tandem cells).

A CPU 253 is used for performing various controls. In a RAM 255, there are stored various types of data concerning, for example, the presence or absence of any abnormality in any of the lithium single cells forming the lithium battery, the charge voltage value of the lithium single cells forming the lithium battery, and the output voltage of the lithium battery, as they are detected. A communications port 256 outputs the various types of data stored in the RAM 255 to' external control devices. The various types of data outputted via the communications port 256 can be externally obtained via a connector 257.

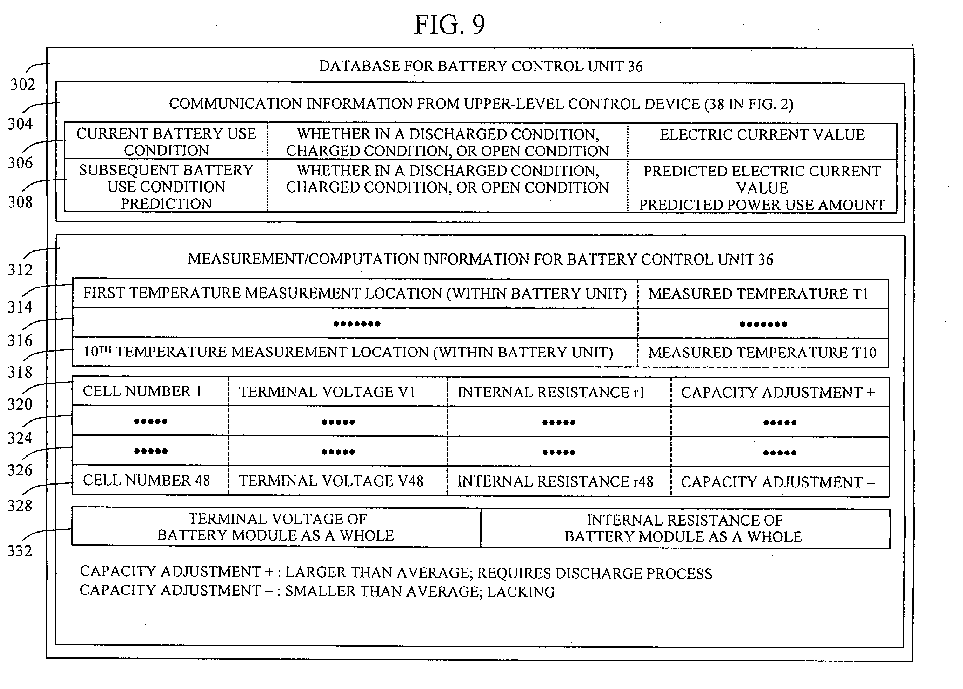

Fig. 9 shows a database for the battery control unit 36 of Fig. 2 (battery control unit 250 of Fig. 8). In Fig. 9, the database 302 for the battery control unit 36 shown in Fig. 2 includes a communication information area 304 for the storage of communication information (simple exchange of information) from an upper-level control device (the motor-system control unit 38 for controlling the drive torque of the motor 46 of Fig. 2), and a measurement/computation information area 312 for the storage of measurement/computation information (data about measurement results and the result of computation of the measurement results) for the battery control unit 36 shown in Fig. 2.

The communication information area 304 includes a current battery-use condition area 306 for the storage of data indicating the current condition of battery use, and a subsequent battery-use condition prediction area 308 for the storage of data indicating a predicted subsequent battery-use condition. The data stored in the current battery use condition area 306 includes data indicating whether or not a battery (each lithium single cell) is currently in a discharged condition, charged condition, or open condition, and the current value at a given moment of each lithium single cell. The data stored in the subsequent battery use condition prediction area 308 includes data indicating whether or not a battery (each lithium single cell) in its current state is going to be in a discharged condition, charged condition, or open condition when used next time, and current predictions about the current value and the amount of power use by each lithium single cell.

The measurement/computation information area 312 for the storage of measurement/computation information (measurement results and data obtained by computation of the measurement results) for the battery control unit 36 shown in Fig. 2 includes a temperature data area for the storage of measurement temperatures together with the location of measurement, lithium single cell information areas (for the terminal voltage and internal resistance of each lithium single cell, and whether or not capacity adjustment is required (+, -)), and a battery module information area. A positive (+) capacity adjustment indicates that the capacity (voltage) is higher than average and that a discharge process is required. A negative (-) capacity adjustment indicates that the capacity (voltage) is lower than average and lacking.

In the temperature data area, there are stored a measured temperature T1 at a first temperature measurement location 314 within the battery unit, measured temperatures T2 to T9 at second to ninth temperature measurement locations 316 within the battery unit, and measured temperature T10 at a 10^{th} temperature measurement location 318 within the battery unit. In the lithium single cell information area 320, there are stored cell number 1 indicating a particular lithium single cell, and corresponding terminal voltage V1, internal resistance r1, and capacity adjustment (+). In individual lithium single cell information areas 324 and 326, there are stored cell numbers indicating individual lithium single cells, and corresponding terminal voltages V2 to V47, internal resistance r2 to r47, and capacity adjustment indications. In the lithium single cell information area 328, there are stored cell number 48 indicating a particular lithium single cell, and corresponding terminal voltage V48, internal resistance r48, and capacity adjustment indication (-). In a battery module information area 332, there are stored the terminal voltage and internal resistance of the battery module as a whole.

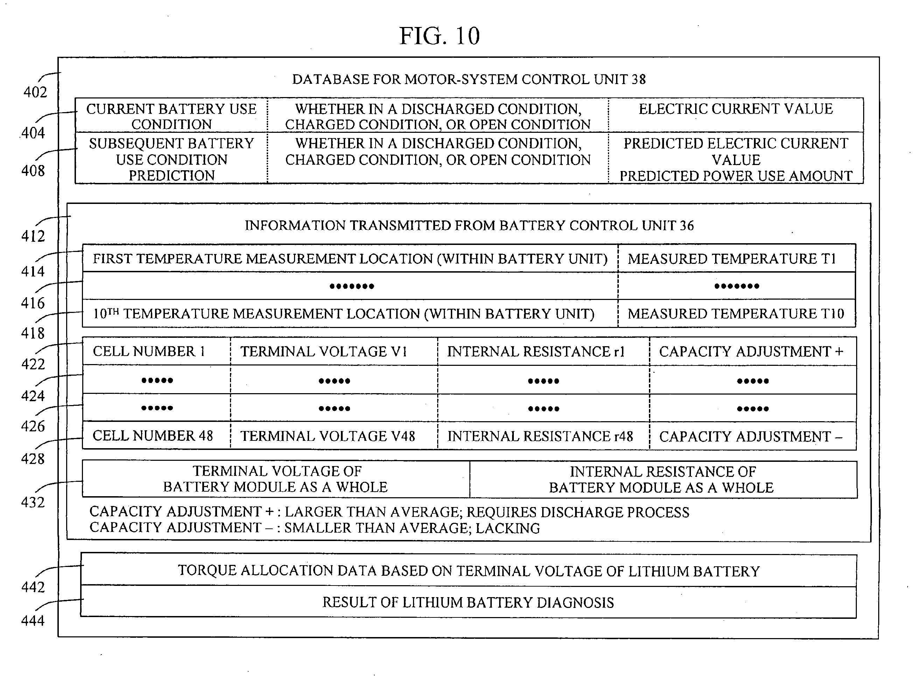

Fig. 10 shows a database 402 for the motor-system control unit 38 for controlling the drive torque of the motor 46 shown in Fig. 2. The database 402 includes a battery-use condition data area, an information area 412 for information transmitted from the battery control unit 36 shown in Fig. 2 (battery control unit 250 shown in Fig. 8), and a lithium battery condition area.

The battery use-condition data area includes a current battery use condition area 404 for the storage of data indicating the current battery use condition, and a subsequent battery use condition prediction area 408 for the storage of data indicating a predicted subsequent battery use condition. The data stored in the current battery use condition area 404 includes data indicating whether the battery is currently in a discharged condition, a charged condition, or an open condition, and the current value at the moment of each lithium single cell. The data stored in the subsequent battery use condition prediction area 408 includes data indicating whether the battery (individual lithium single cells) is going to be in a discharged condition, a charged condition, or an open condition when used next time, and current predictions about the current value and the amount of power use by each lithium single cell.

The area 412 for the information transmitted from the battery control unit 36 of Fig. 2 (battery control unit 250 of Fig. 8) includes a temperature data area for the storage of measured temperatures together with the location of measurement, individual lithium single cell information area (for the terminal voltage and internal resistance of each lithium single cell, and whether or not capacity adjustment is necessary (+ or -)), and a battery module information area. A positive (+) capacity adjustment indicates that the capacity (voltage) is larger than average and that a discharge process is necessary, while a negative (-) capacity adjustment indicates that the capacity (voltage) is lower than average and lacking.

In the temperature data area, there are stored a measured temperature T1 at a first temperature measurement location 414 within the battery, measured temperatures T2 to T9 at second to ninth temperature measurement locations 416 within the battery, and measurement temperature T10 at a 10^{th} temperature measurement location 418 within the battery unit. In a lithium single cell information area 422, there are stored cell number 1 indicating a particular lithium single cell, and corresponding terminal voltage V1, internal resistance r1, and capacity adjustment (+). In individual lithium single cell information areas 424 and 426, there are stored the cell numbers 2 to 47 indicating individual lithium single cells, and corresponding terminal voltage V2 to V47, internal resistance r2 to r47, and capacity adjustment indications. In a lithium single cell information area 428, there are stored cell number 48 indicating a particular lithium single cell, and corresponding terminal voltage V48, internal resistance r48, and capacity adjustment (-). In a battery module information area 432, there are stored the terminal voltage and internal resistance of the battery module as a whole.

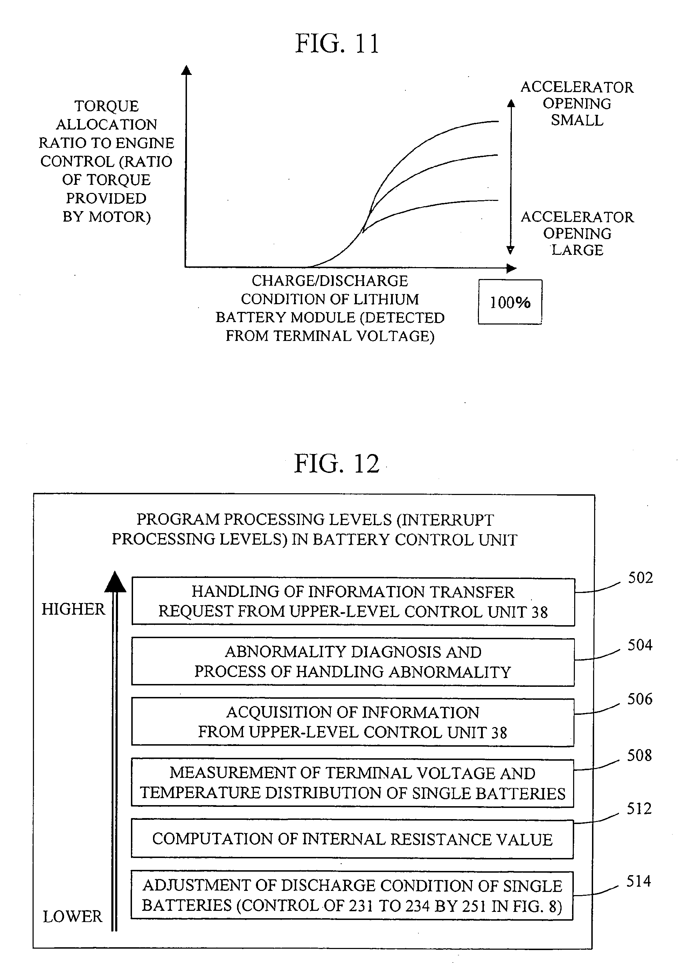

In a lithium battery condition area 442, there is stored torque allocation data based on the terminal voltage of the lithium battery is stored. The torque allocation based on the terminal voltage of the lithium battery is determined on the basis of a characteristics chart shown in Fig. 11. The torque allocation ratio (the ratio of torque to be provided by the motor) with respect to engine control for a particular charge or discharge condition of the lithium battery module (the entire tandem cells) have different characteristics (torque allocation ratios) depending on the degree of accelerator opening.

In a lithium battery condition area 444 shown in Fig. 10, there is stored data concerning the result of diagnosis of individual lithium single cells forming the lithium battery.

Now referring to Fig. 12, program process levels (interrupt handling levels) in the battery control unit will be described. For a processing program in the battery control unit, a first processing priority is given to a process 502 for handling an information transfer request from the upper-level control unit 38 (the motor-system control unit 38 that controls the drive torque of the motor 46 shown in Fig. 2). A second priority is given to a process 504 in which each lithium single cell is diagnosed for abnormality and a process of handling any abnormalities is performed. A third priority is given to a process 506 in which information is acquired from the upper-level control unit 38 (the motor-system control unit 38 that controls the drive torque of the motor 46 shown in Fig. 2). A fourth priority is given to a process 508 of measuring the terminal voltage and temperature distribution of the single batteries (lithium single cells). A fifth priority is given to a process 512 of computing the internal resistance value of each single battery (lithium single cell). A sixth priority is given to a process 514 of adjusting the discharge condition of each single battery (lithium single cell), namely an on/off control of the switching circuits 231 to 234 by the output port 251 of Fig. 8.

Hereafter, the processing flow of each of the programs shown in Fig. 12 is described.

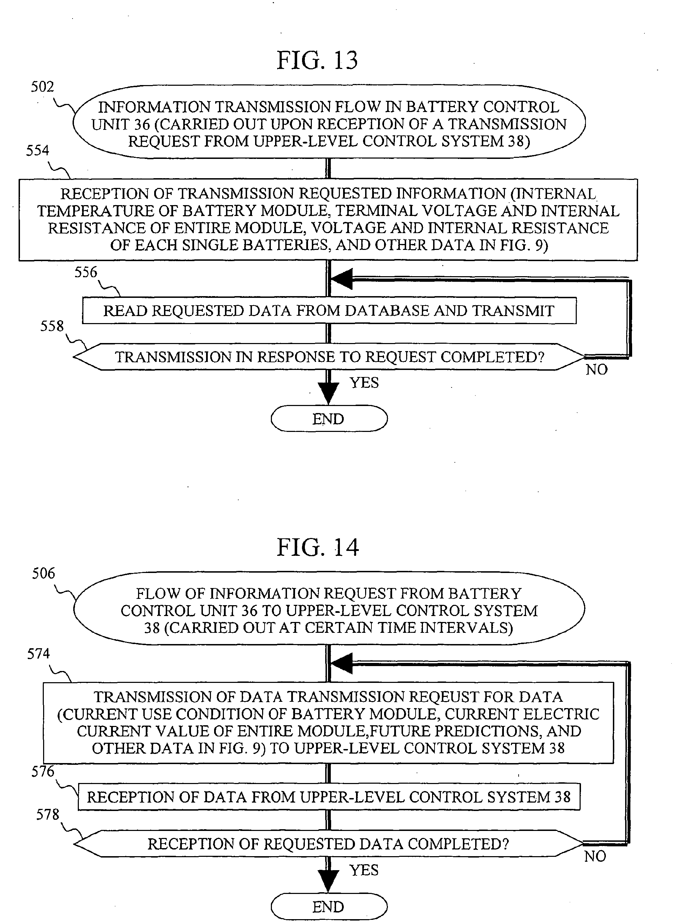

Fig. 13 shows the information transmission flow 502 in the battery control unit 36 of Fig. 12 (the battery control unit 250 of Fig. 8). The flow 502 is carried out in response to a transmission request from the upper-level control unit 38 (the motor-system control unit 38 for controlling the torque of the motor 46 shown in Fig. 2). Specifically, in step 554, transmission request for information (such as the internal temperature of the lithium battery module, the terminal voltage and internal resistance of the module as a whole, the voltage and internal resistance of each single battery, and other data shown in Fig. 9) is received. Upon reception of the transmission request in step 554, requested data is read from the database and transmitted in step 556. After the requested data is transmitted in step 556, it is determined in step 558 whether or not the transmission has been completed in response to the request. If it is determined that the transmission to the request is not completed, the routine returns to step 556 where the data is read from the database and transmitted. If it is determined in step 558 that the necessary transmission has been completed, the routine ends.

Fig. 14 shows the flow 506 in which the battery control unit 36 (the battery control unit 250 of Fig. 8) requests information from the upper-level control unit 38 (the motor-system control unit 38 for controlling the drive torque of the motor 46 of Fig. 2). The flow 506 is carried out at predetermined time intervals. Specifically, in step 574, a data transmission request for information (such as the current use condition of the lithium battery module, the current value at the moment of the lithium battery module as a whole, future predictions, and other data shown in Fig. 9) is transmitted to the upper-level control system 38 (the motor-system control unit 38 for controlling the drive torque of the motor 46 of Fig. 2). After the data transmission request is transmitted in step 574, the battery control unit 36 then receives data from the upper-level control unit 38 (the motor-system control unit 38 for controlling the drive torque of the motor 46 of Fig. 2) in step 576. As the data is received in step 576, it is determined in step 578 whether or not the reception of the requested data has been completed. If it is determined in step 578 that the reception of the requested data is not completed, the routine returns to step 574 from which the same process is repeated until the reception of the requested data is completed. If it is determined in step 578 that the reception of the requested dada is completed, the routine ends.

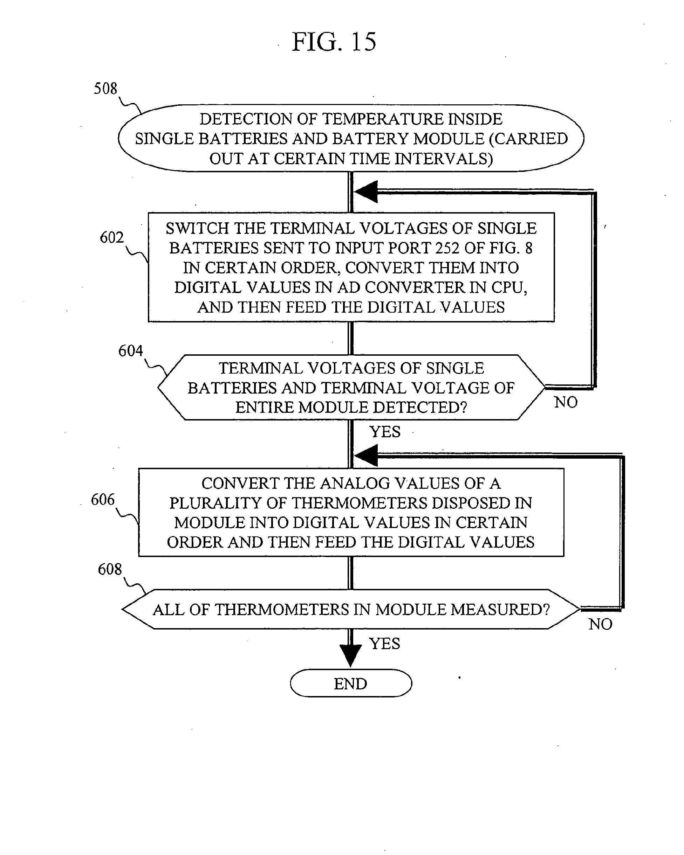

Fig. 15 shows the flow of the process 508 of measuring the terminal voltage of the single batteries (lithium single cells) shown in Fig. 12 and temperature distribution, namely the temperature detection process 508 for the detection of temperature in the single batteries (lithium single cells) and the lithium battery module. This process 508 of detecting the temperature in the single batteries (lithium single cells) and the lithium battery module is performed at predetermined time intervals. Specifically, in step 602, the terminal voltages of the single batteries that are sent to the input port 252 shown in Fig. 8 are switched in a certain order and then sent to an AD converter in the CPU where they are converted into digital values, which are then taken in. As the terminal voltages of the single batteries are taken in in step 602, it is then determined in step 604 whether or not the terminal voltages of the single batteries and the terminal voltage of the lithium battery module as a whole have been detected. If it is determined in step 604 that the terminal voltages of the single batteries and the terminal voltage of the lithium battery module as a whole are not yet detected, the routine returns to step 602.

If it is determined in step 604 that the terminal voltage of the single battery and the terminal voltage of the lithium battery module as a whole have been detected, the analog values of a plurality of thermometers disposed within the lithium battery module are converted into digital values in a certain order and taken in. After the values of the multiple thermometers disposed within the lithium battery module are AD-converted at a certain order in step 606, it is determined in step 608 whether or not all of the multiple thermometers in the lithium battery module have been measured. If not, the routine returns to step 606 where the same process is repeated until it is determined in step 608 that all of the thermometers in the lithium battery module have been measured, whereupon the routine ends.

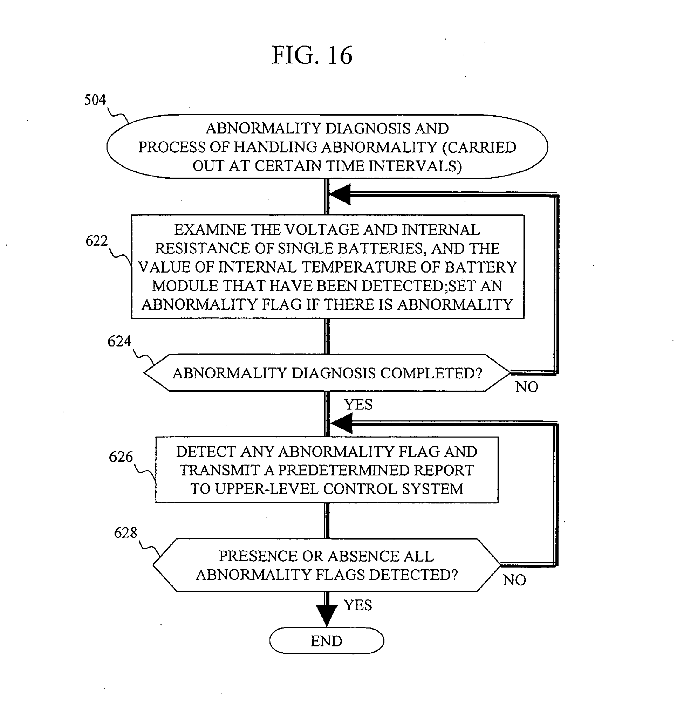

Fig. 16 shows the flow of the process 504 shown in Fig. 12 of diagnosing each lithium single cell and handling any abnormalities. This process 504 is performed at predetermined time intervals. Specifically, step 622 examines the terminal voltage and internal resistance of the single batteries and the internal temperature of the lithium battery module that have been detected for any abnormalities. If there is an abnormality, an abnormality flag is set. After the terminal voltage and internal resistance of the single batteries and the internal temperature of the lithium battery module that have been detected are examined in step 622, it is determined in step 624 whether or not the abnormality diagnosis has been completed. If it is determined in step 624 that the abnormality diagnosis has not been completed, the routine returns to step 622 where the routine waits until the abnormality diagnosis is completed. If it is determined in step 624 that the abnormality diagnosis has been completed, any abnormality flag that has been set is detected in step 626 where a predetermined report is transmitted from the battery control unit 36 (battery control unit 250 of Fig. 8) to the upper-level control unit 38 (the motor-system control unit 38 for controlling the drive torque of the motor 46 of Fig. 2). After any abnormality flag that has been set is detected and a predetermined report is transmitted from the battery control unit 36 in step 626, it is then determined in step 628 whether or not all of the abnormality flags have been detected. If not, the routine returns to step 626 and the process of detecting the presence or absence of abnormality flags is repeated until it is determined in step 628 that all of the abnormality flags have been detected, whereupon the routine ends.

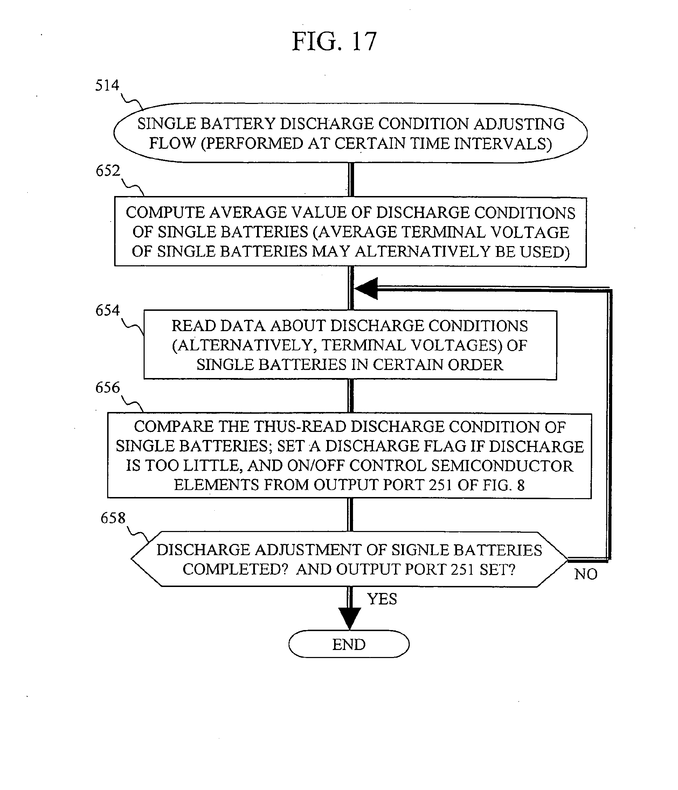

Fig. 17 shows the flow of the process 514 of adjusting the discharge condition of the single batteries (lithium single cells) shown in Fig. 12 (corresponding to the on/off control of the switching circuits 231 to 234 by the output port 251 of Fig. 8). In this process 514 of adjusting the discharge condition of the single batteries (lithium single cells) is performed at predetermined time intervals. Specifically, in step 652, an average value of the discharge conditions of the single batteries is computed (alternatively, the terminal voltage of the single batteries may be used.). As the average value of the discharge conditions of the single batteries is computed in this step 652, data concerning the discharge condition of the single batteries (alternatively, the terminal voltage of the single batteries may be used) is read in step 654. As the data about the discharge condition of the single batteries is read in step 654, the discharge condition of the thus read single batteries is compared with the average value in step 656. If the amount of discharge is small, a discharge flag is set and the semiconductor elements are turned on and off from the output port 251 of Fig. 8. As the semiconductor elements are thus turned on and off from the output port 251 of Fig. 8 by setting the discharge flag in the event of little discharge in step 656, it is determined in step 658 whether or not the discharge condition adjustment of the single batteries has been completed. If it is determined in step 658 that the adjustment is not yet completed, the routine returns to step 654 and the adjustment of the discharge condition of the single batteries is repeated in a predetermined order until it is determined in step 658 that the discharge condition adjustment of the batteries has been completed, whereupon the routine ends.

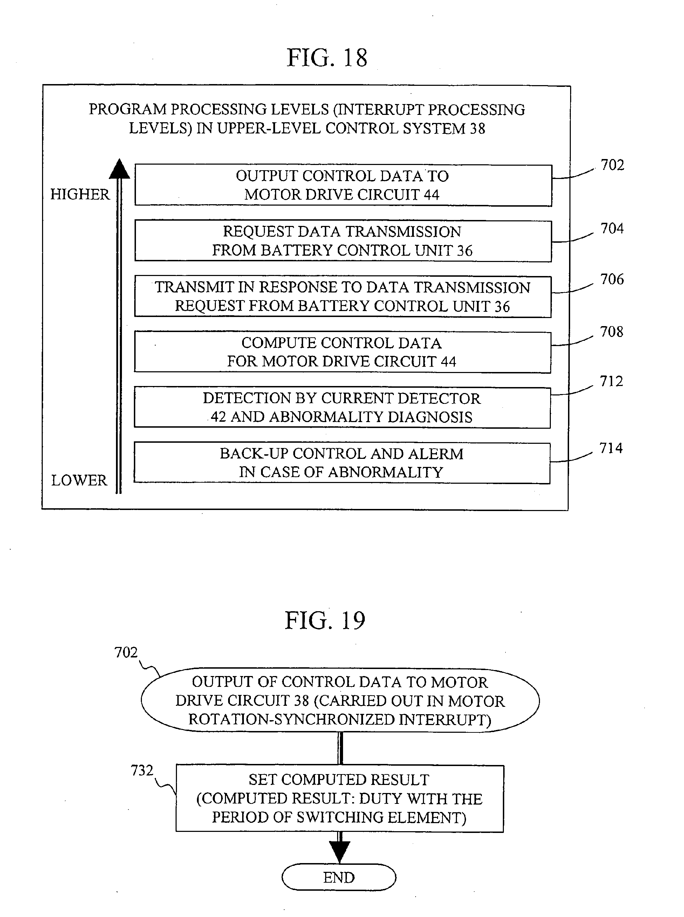

Now referring to Fig. 18, the program processing levels (interrupt processing levels) in the motor-system control unit 38 for controlling the drive torque of the motor 46 of Fig. 2 will be described. A first priority is given to a process 702 of processing the output of control data to the motor drive circuit 44. A second priority is given to a process 704 of processing a data transmission request to the battery control unit 36 (the battery control unit 250 of Fig. 8). A third priority is given to a process 706 of processing the transmission in response to a data transmission request from the battery control unit 36 (the battery control unit 250 of Fig. 8). A fourth priority is given to a process 708 of computing control data for the motor drive circuit 44. A fifth priority is given to a process 712 of current detection by the current detector 42 and abnormality diagnosis of each lithium single cell. A sixth priority is given to a process 714 of back-up control and alert processing in the event of abnormality in any of the lithium single cells.

The processing flow of each of the programs of Fig. 18 is described below.

Fig. 19 shows the flow of the process 702 of outputting control data to the motor drive circuit 44 shown in Fig. 18. This flow 702 is performed by a motor rotation-synchronized interrupt. Specifically, in step 732, the computation results are set. The computation results are duty with the synchronization of the switching elements. If the motor rotation becomes so fast that the computations cannot catch up, the values that have been computed would have to be used again; this, however, poses no problems in terms of control accuracy. After the computation results are set in step 732, the flow ends.

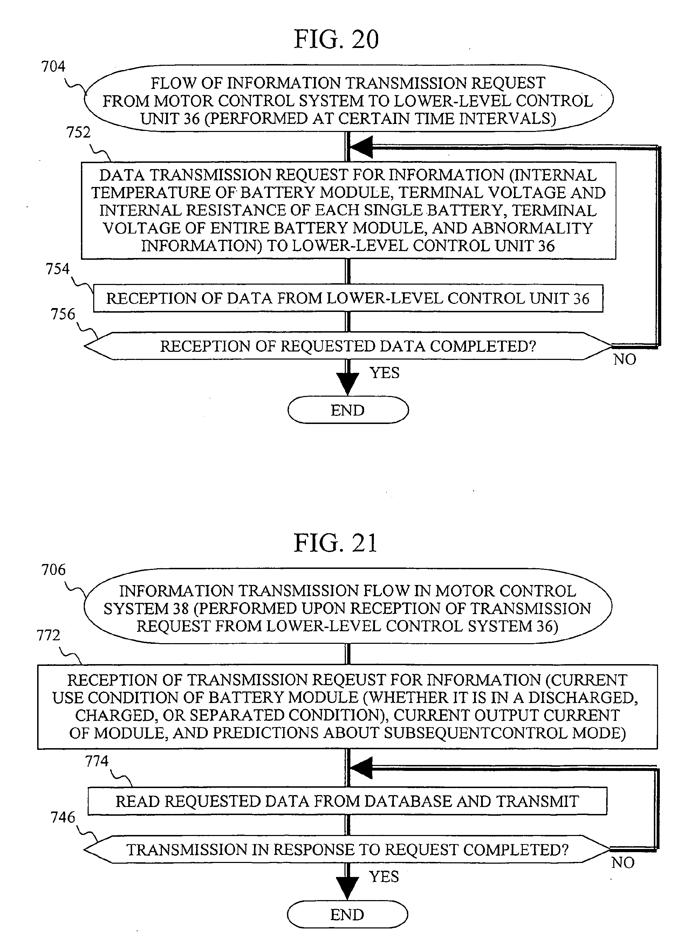

Fig. 20 shows the flow of the process 704 of data transmission request to the battery control unit 36 shown in Fig. 18 (the battery control unit 250 of Fig. 8), i.e., the process 704 of information transmission request from the motor control system (the motor-system control unit 38 for controlling the drive torque of the motor 46 of Fig. 2) to the lower-level control unit (battery control unit) 36 (the battery control unit 250 of Fig. 8). This process is performed at predetermined time intervals. Specifically, in step 752, a data transmission request for data (such as the internal temperature of the lithium battery module, the terminal voltage of each single battery, the internal resistance of each single battery, the terminal voltage of the module as a whole, and abnormality information) is transmitted to the lower-level control unit (battery control unit) 36 (the battery control unit 250 of Fig. 8). After the request for the information (such as the internal temperature of the lithium battery module, the terminal voltage of each single battery, the internal resistance of each single battery, the terminal voltage of the module as a whole, and abnormality information) is transmitted to the lower-level control unit 36, the motor control system (the motor-system control unit 38 for controlling the drive torque of the motor 46 of Fig. 2) then receives data from the lower-level control unit (battery control unit) 36 (the battery control unit 250 of Fig. 8) in step 754. As the data from the lower-level control unit 36 is received by the motor control system in step 754, it is determined in step 756 whether or not the motor control system (the motor-system control unit 38 for controlling the drive torque of the motor 46 of Fig. 2) has received the requested data. If it is determined in step 756 that the motor control system 38 has not completed the reception of the requested data, the routine returns to step 752 where the process of transmitting a request for the information (such as the internal temperature of the lithium battery module, the terminal voltage of each single battery, the internal resistance of each single battery, the terminal voltage of the module as a whole, and abnormality information) to the lower-level control unit 36 is repeated. If it is determined in step 756 that the reception of the requested data by the motor control system 38 has been completed, the routine ends.

Fig. 21 shows the process 706 of taking in information from the upper-level control unit 38 of Fig. 18 (the motor-system control unit 38 for controlling the drive torque of the motor 46 of Fig. 2), i.e., the flow of transmission of information from the motor control system 38 to the lower-level control unit (the battery control unit) 36 (the battery control unit 250 of Fig. 8). This information transmission process is performed upon reception of a transmission request from the lower-level control unit (the battery control unit) 36 (the battery control unit 250 of Fig. 8). Specifically, in step 772, a data transmission request for information (such as the current use condition of the lithium battery module (i.e., whether it is in a discharged, charged, or separated condition), the current output current value of the lithium battery module, and prediction about the next control mode) is received from the lower-level control unit (the battery control unit) 36 (the battery control unit 250 of Fig. 8). As the data transmission request for information is received from the lower-level control unit 36 in step 772, the upper-level control unit 38 (the motor-system control unit 38 for controlling the drive torque of the motor 46 of Fig. 2) reads the requested data from the database and sends it to the lower-level control unit (the battery control unit) 36 (the battery control unit 250 of Fig. 8) in step 774. After the transmission of the requested data to the lower-level control unit 36 in step 774 is over, it is determined in step 776 whether or not the transmission in response to the request from the lower-level control unit (the battery control unit) 36 (the battery control unit 250 of Fig. 8) has been completed. If it is determined in step 776 that the transmission in response to the request from the lower-level control unit 36 has not been completed, the routine returns to step 774 where the process of reading the requested data from the database and transmitting it to the lower-level control unit 36 is repeated. If it is determined in step 776 that the transmission in response to the request from the lower-level control unit 36 has been completed, the routine ends.

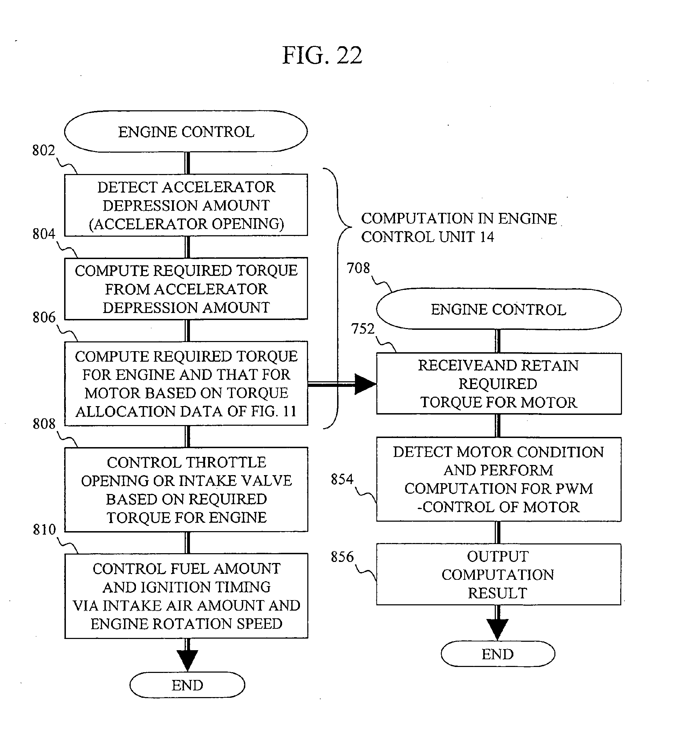

Fig. 22 shows the control flow for the engine 18

In step 802, the degree of depression of the accelerator pedal (accelerator opening) is detected. The detection of the accelerator depression amount (accelerator opening) is carried out by an accelerator sensor (the detector 12 shown in Fig. 2) attached to the accelerator. As the accelerator depression amount (accelerator opening) is detected in step 802, a required torque commensurate with the engine output is computed on the basis of the detected value of the accelerator depression amount (accelerator opening) in step 804. After the required torque commensurate with the engine output is computed from the detected value of the accelerator depression amount (accelerator opening) in step 804, a required torque for the engine 18 and that for the motor 46 are computed on the basis of the characteristics chart (torque allocation data) of Fig. 11 in step 806. The result of computation of the required torque for the motor 46 is transmitted from the engine/transmission mechanism control unit 14 of Fig. 2 to the motor-system control unit 38 for controlling the drive torque of the motor 46 of Fig. 2.

After the required torque for the engine 18 and that for the motor 46 have been computed from the characteristics chart (torque allocation data) of Fig. 11 in step 806, the throttle opening, or the intake valve, is controlled in step 808 based on the required torque for the engine 18 that has been computed from the characteristics chart (torque allocation data) of Fig. 11. After the throttle opening, or the intake valve, is controlled in step 808 based on the computed required torque for the engine 18 in step 808, the fuel amount and the ignition timing are controlled based on the intake air amount and the engine rotation speed, and the routine then comes to an end.

On the other hand, the process 708 of computing control data for the motor drive circuit 44 is performed separately from the engine control flow. Specifically, in the engine control flow, of the required torque for the engine 18 and that for the motor 46 that have been computed from the characteristics chart (torque allocation data) of Fig. 11, the result of computation of the required torque for the motor 46 is transmitted in step 806 from the engine/transmission mechanism control unit 14 of Fig. 2 to the motor-system control unit 38 for controlling the drive torque of the motor 46 of Fig. 2. The result of computation of the required torque for the motor 46 is then received by the motor-system control unit 38 for controlling the drive torque of the motor 46 of Fig. 2 in step 752 and is retained therein.

After the result of computation of the required torque for the motor 46 is received and retained in step 752, the condition of the motor 46 is detected and computations are performed in step 854 for the PWM control of the motor 46. The result of computations for the PWM control of the motor 46 is then outputted in step 856, and the flow comes to an end.

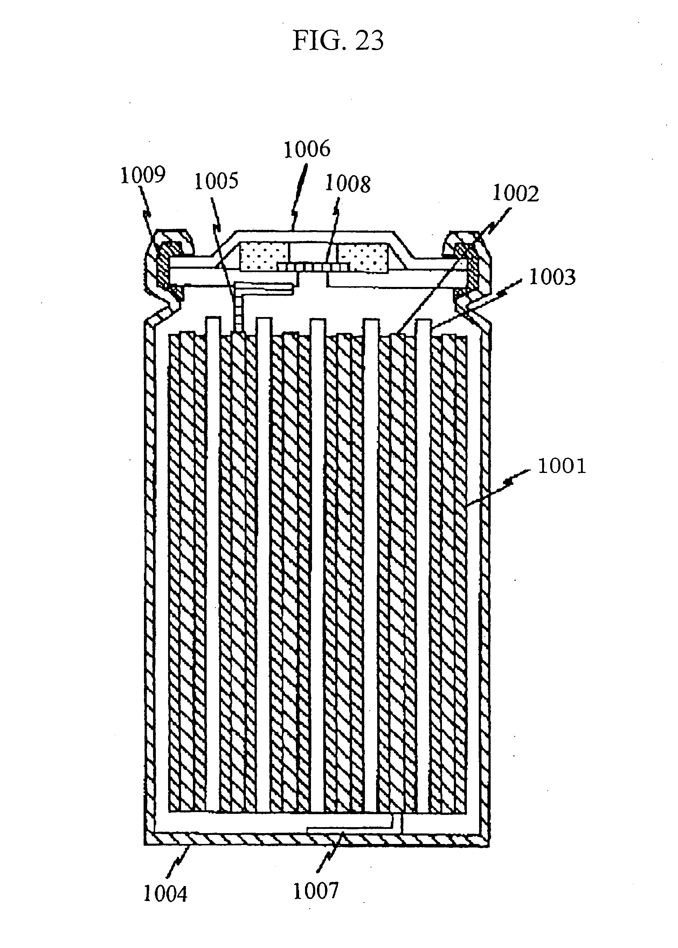

Fig. 23 shows the structure of a lithium single cell.

Fig. 23 shows a cross section of a cylindrical lithium secondary battery. The lithium single cell comprises a group of electrodes that have a wound structure in which a separator 1003 is placed between a positive electrode 1001 and a negative electrode 1002. The separator 1003 is made of a porous sheet of polyethylene, for example. A positive electrode lead 1005 and a negative electrode lead 1007 that are welded to an upper portion of each electrode are disposed in opposite directions. The positive electrode lead 1005 is welded to the bottom surface of a battery cap 1006. The negative electrode lead 1007 welded to the bottom surface of a battery can 1004. Electrolyte is introduced via an opening of the can, and the battery is sealed by crimping the battery cover 1006, to which a safety valve is provided, and the battery can 1004 with a packing 1009 placed therebetween.

## Claims

1. A battery module (32) comprising:
a battery unit (194); and
a circuit unit (192) disposed on one end of said battery unit (194), wherein
said battery unit (194) comprises a casing main body (195) including an outer frame (195a) formed by a board-like member in a rectangular shape, and an internal member (197) supported inside said outer frame (195a), wherein a plurality of lithium single batteries (202) (cells) are connected in series and fixed longitudinally to form a single tandem cell (200) (set battery), and a plurality of said tandem cells (200) are disposed in parallel on either side of said internal member (197) such that the longitudinal axis of said tandem cells (200) lies in the same direction as the longitudinal direction of said external frame (195a), wherein a connection metal fitting is provided at each end of said battery unit (194), said connection metal fitting connecting said plurality of tandem cells (200) in series, wherein a cover (198) with ventilation openings (198a) is mounted on said casing main body (195) on the outside of said tandem cells (200) in said battery unit (194), and wherein
said circuit unit (192) comprises a control circuit for detecting the voltage of each lithium single battery (202) and transmitting the result of detection using a control means.

2. The battery module according to claim 1, wherein the voltage of each lithium single battery (202) of which said multiple tandem cells (200) are formed is adjusted by switching a bypass discharge circuit connected to each lithium single battery (202), wherein said bypass discharge circuits are disposed on a heat-dissipating plate (220) that is provided in said circuit unit (192) at the end of the battery (194).

3. The battery module according to claim 1 or 2, wherein a connector is disposed near said heat-dissipating plate (220), said connector being connected to each of said bypass discharge circuits, which are connected to either end of each of said lithium single batteries (202).

4. The battery module according to any one of claims 1 to 3, wherein charge/discharge terminals for the series-connected multiple tandem cells (200) are provided towards said circuit unit (192) of said battery unit (194).

5. The battery module according to claim 3 or 4, wherein said connector provided near said heat-dissipating plate (220) is provided in said circuit unit (192).

6. A vehicle control system for controlling the electric power for a drive motor (46) mounted in a vehicle as it runs, said system comprising a battery module (32) including a lithium battery, said system further comprising:
a battery unit (194) comprising a casing main body (195) including an outer frame (195a) formed by a board-like member in a rectangular shape, and an internal member (197) supported inside said outer frame (195a), wherein a plurality of lithium single batteries (202) (cells) are connected in series and fixed longitudinally to form a single tandem cell (200) (set battery), and a plurality of said tandem cells (200) are disposed in parallel on either side of said internal member (197) such that the longitudinal axis of said tandem cells (200) lies in the same direction as the longitudinal direction of said external frame (195a), wherein a connection metal fitting is provided at each end of said battery unit (194), said connection metal fitting connecting said plurality of tandem cells (200) in series, wherein a cover (198) with ventilation openings (198a) is mounted on said casing main body (195) on the outside of said tandem cells (200) in said battery unit (194), a circuit unit (192) disposed at one end of said battery unit (194), said battery unit; and
a circuit unit (192) comprising a control circuit for detecting the voltage of each lithium single battery (202) and transmitting the result of detection using a control means, wherein
bypass discharge circuits are disposed on a heat-dissipating plate (220) for each of said lithium single batteries (202) (cells), said system further comprising:
a voltage adjustment function whereby individual voltages detected for each of said lithium single batteries (202) (cells) are compared, and a bypass discharge circuit connected to a lithium single battery (202) (cell) in which a potential difference exceeding a predetermined voltage value with respect to a lowest voltage among the detected voltages has been detected is subjected to a switching operation so as to lower the potential difference below the predetermined voltage value;
a switching function for turning off a switch of the drive motor (46) when a series voltage value of the multiple tandem cells (200) is lower than a first reference voltage, and turning off a switch for the charging of said tandem cells (200) when the series voltage value is not less than a second reference voltage;
a self-diagnosing function whereby the voltage of each of said lithium single batteries (202) (cells) is detected, an internal resistance value of each lithium single battery (202) (cell) is computed from the thus detected voltage value of each lithium single battery (202) (cell), and diagnosing each lithium single battery (202) (cell) for any abnormality based on the computed internal resistance value;
a battery cooling function whereby the temperature of each of the lithium single batteries (202) (cells) of which said tandem cells (200) are made is detected, and whereby a switch of a tandem cell cooling fan is turned on when the detected battery temperature exceeds a first set temperature, while turning off said switch of said tandem cell cooling fan when the detected battery temperature drops below a second set temperature; and
an engine assisting function that detects the voltage of each of said lithium single batteries (202) (cells), computes the charge ratio of said tandem cells (200), and controls the supply of an electric current to the drive motor (46) in accordance with torque allocation versus charge ratio characteristics depending on an accelerator depression amount while the vehicle is running.

7. The vehicle control system according to claim 6, wherein the voltage of each of the lithium single batteries (202) of which the tandem cells (200) are made up is carried out by switching the bypass discharge circuit connected to each lithium single battery (202), wherein the bypass discharge circuits connected to the individual lithium single batteries (202) are disposed on a heat-dissipating plate (220) that is disposed in the circuit unit (192) at an end of the battery (194).

8. The vehicle control system according to claim 6 or 7, wherein a connector is provided near said heat-dissipating plate (220), said connector being connected to said bypass discharge circuits, which are connected to either end of each lithium single battery (202).

9. The vehicle control system comprising a battery module (32) having a lithium battery according to any one of claims 6 to 8, wherein charge/discharge terminals for the series-connected multiple tandem cells (200) are provided towards the circuit unit (192) of said battery unit (194).

10. The vehicle control system employing the battery module (32) having a lithium battery according to claim 8 or 9, wherein the connector provided near said heat-dissipating plate (220) is disposed in said circuit unit (192).

11. A vehicle control system for controlling the electric power for a drive motor (46) mounted in a vehicle as it runs, the system comprising a battery module according to any of claims 1 to 5, wherein at least one of the following functions are provided:
a voltage adjustment function whereby individual voltages detected for each of said lithium single batteries (202) (cells) are compared, and a bypass discharge circuit connected to a lithium single battery (202) (cell) in which a potential difference exceeding a predetermined voltage value with respect to a lowest voltage among the detected voltages has been detected is subjected to a switching operation so as to lower the potential difference below the predetermined voltage value;
a switching function for turning off a switch of the drive motor (46) when a series voltage value of the multiple tandem cells (200) is lower than a first reference voltage, and turning off a switch for the charging of said tandem cells (200) when the series voltage value is not less than a second reference voltage;
a self-diagnosing function whereby the voltage of each of said lithium single batteries (202) (cells) is detected, an internal resistance value of each lithium single battery (202) (cell) is computed from the thus detected voltage value of each lithium single battery (202) (cell), and diagnosing each lithium single battery (202) (cell) for any abnormality based on the computed internal resistance value;
a battery cooling function whereby the temperature of each of the lithium single batteries (202) (cells) of which said tandem cells (200) are made is detected, and whereby a switch of a tandem cell cooling fan is turned on when the detected battery temperature exceeds a first set temperature, while turning off said switch of said tandem cell cooling fan when the detected battery temperature drops below a second set temperature; and
an engine assisting function that detects the voltage of each of said lithium single batteries (202) (cells), computes the charge ratio of said tandem cells (200), and controls the supply of an electric current to the drive motor (46) in accordance with torque allocation versus charge ratio characteristics depending on an accelerator depression amount while the vehicle is running.
